# EUROPEAN PATENT SPECIFICATION

(11) **EP 2 576 217 B1**
(45) Date of publication and mention of the grant of the patent: **04.11.2015**
(21) Application number: 11719614.7
(22) Date of filing: 27.04.2011
(51) Int. Cl.: F03D 11/04, B32B 33/00, H01Q 17/00

(54) **IMPROVEMENTS RELATING TO WIND TURBINES**
VERBESSERUNG MIT BEZUG AUF WINDKRAFTRÄDER
AMELIORATIONS SE RAPPORTANT AUX EOLIENNES

(30) Priority: 04.05.2010 GB 201007403
(43) Date of publication of application: 10.04.2013
(73) Proprietor: Vestas Wind Systems A/S, 8200 Aarhus N (DK)
(72) Inventor: APPLETON, Steve, Fleet Hampshire GU52 7LU (GB)
(74) Representative: Vestas Patents Department
(86) International application number: PCT/GB2011/050829
(87) International publication number: WO 2011/138597

(56) References cited:
- EP-A2- 0 742 095
- WO-A1-93/23893
- DE-U1- 9 316 963
- FR-A1- 2 251 686
- US-A- 4 162 496
- US-A- 5 764 181
- James C.G. Matthews, Jon Pinto, Carlos Sarno: "STEALTH SOLUTIONS TO SOLVE THE RADAR-WIND FARM INTERACTION PROBLEM", 2007 Loughborough Antennas and Propagation Conference , 3 April 2007 (2007-04-03), XP002665981, Retrieved from the Internet: URL:http://ieeexplore.ieee.org/stamp/stamp .jsp?arnumber=04218476 [retrieved on 2011-12-16]

## Description

### Technical field

The present invention relates to the use of radar-absorbing materials in connection with wind turbines for reducing interference caused by wind turbines to radar systems. In particular, the present invention is concerned with reducing the radar cross section of a wind turbine tower.

### Background

Modern wind turbines are large structures that tend to have a high radar cross section (RCS). The RCS of an object is a measure of its ability to reflect radar signals, or in other words a measure of how visible the object is to radar systems. In view of their high RCS, wind turbines have the potential to interfere with radar systems, such as air traffic control or military radar. This problem has resulted in a large number of planning applications for wind farms being refused.

To mitigate this problem, attempts have been made to modify the structure of wind turbines to make them less reflective to radar signals, i.e. to reduce their RCS. For example, applicant's unpublished PCT patent applications PCT/GB2010/050668 and PCT/GB2010/050665 describe reducing the RCS of wind turbine blades by incorporating radar-absorbing materials (RAM) into the composite structure of the blades.

Aside from blades, the tower of a wind turbine has a high RCS due to its large size and the fact that it is made primarily from metal, which is highly reflective to radar signals. It has been proposed to coat the tower with radar-absorbing paints to reduce the RCS. However, this solution can require changes to the standard painting methods used to produce the tower. In addition, the durability of such paints must be high in order to protect the underlying tower structure.

When considering paint solutions, it is necessary to consider the thickness of the paint. This is because the paint thickness determines to an extent the radar frequencies that the painted structure can absorb. The required paint thickness generally increases with increasing radar wavelength, or decreasing radar frequency. At present, affordable and durable radar-absorbing paint is only likely to be capable of absorbing radar signals above about 3 GHz, which is typical of air-traffic control radar. Paint is unlikely to be suitable for absorbing radar signals lower than about 3 GHz, because it would be too thick and heavy for practical application to the tower. Consequently, paint is presently not a suitable option for absorbing lower radar frequencies, for example the 1.2 GHz signals associated with long range air traffic control and surveillance and many military air defence radars, because an unrealistically thick coating would be required.

Whilst radar-absorbing paints are a suitable solution in some circumstances, it is an object of the present invention to provide an alternative solution for reducing the RCS of a wind turbine tower.

US5764181 describes a radar attenuating coasting for vehicles or buildings where the coating can be applied in sheet stock. James C.G. Matthews, Jon Pinto, Carlos Sarno: "STEALTH SOLUTIONS TO SOLVE THE RADAR-WIND FARM INTERACTION PROBLEM", 2007 Loughborough Antennas and Propagation Conference , 3 April 2007 describes solutions for reducing the impact of wind turbines on radar stations. FR2251686 describes protective and decorative coatings for walls in the form of tiles.

### Summary of the invention

According to a first aspect of the present invention, there is provided a wind turbine according to claim 1.

In practice, several panels are likely to be mounted to the tower. The panels serve as a radar-absorbing cladding. As radar-absorbing paint is not required, the outer surface of the tower may be painted with standard paint. Hence, the present invention does not require any changes to the present production process of a tower. The durability risks associated with radar-absorbing paints are avoided, and the structural integrity of the tower is not compromised because the outer surface of the tower is not penetrated.

Advantageously, the panels may be constructed to absorb frequencies lower than that possible with realistic thicknesses of radar-absorbent paint. For example, as described in more detail later, radar-absorbing panels in accordance with the invention may be constructed to absorb radar frequencies of around 1.2 GHz. Also, as described in more detail later, panels in accordance with the invention may be constructed which have a radar-absorption performance of 30 dB or more, which is significantly higher than the typical performance of affordable radar-absorbing paints.

Modern wind turbine towers typically have a circular cross section and taper towards their upper end. The panel may be curved to conform to the curvature of the tower. The inventive concept therefore includes, in combination, a wind turbine tower having a curved outer surface, and a radar-absorbing panel for attaching to the tower, wherein the panel is curved to conform to the curvature of the outer surface of the tower.

Preferably, the panel is of part-circular curvature to match the local curvature of the tower at the height at which the panel is fixed. Preferably, the panel has a concave inner surface and a convex outer surface. Upper and lower edges of the panel may have the same radius of curvature. Alternatively, the lower edge may have a larger radius of curvature than the upper edge, such that the panel conforms to the tapering cross-section of the tower. In other embodiments, the panel may be generally tubular or frustoconical in shape, such that it substantially surrounds the tower at the height at which it is attached. In this configuration, the panel would form a sleeve around the tower.

The panels are preferably attached mechanically to the mounts. To this end, each panel may include one or more mounting formations for engaging with an engagement portion of a mount. In preferred embodiments, each mount includes a projecting stud, which is received by a hole in the panel. A suitable fixing may be provided on the stud to secure the panel to the mount. For example, the stud may be threaded to receive a nut. Preferably, the panels each have multiple mounting formations and are attached to the tower via multiple mounts.

The panels are magnetically mounted to the tower. To this end, each panel may be attached to the tower by one or more magnetic mounts. This solution facilitates the initial cladding process and subsequent replacement or maintenance of the panels because the panels can be easily attached or removed from the outer surface of the tower.

Each panel is spaced apart from the outer surface of the tower. In this configuration, a gap is defined between the panel and the outer surface. The gap allows water to run freely between the panel and the tower, and also allows air to circulate in this region to prevent damp or mould forming. The inventive concept includes a wind turbine having a tower and at least one radar-absorbing panel attached to the tower, wherein the at least one panel is spaced-apart from an outer surface of the tower.

Spacer means may be provided between the panel and the outer surface of the tower to maintain the gap, and/or to determine the size of the gap. The spacer means may include one or more washers provided on the projecting stud of the mount between the panel and the tower. The ability to vary the size of the gap allows panels having a single shape to fit tower regions with different surface curvatures, thereby reducing the number of panel variants needed to clad a tower having a curvature that varies with height.

The panels may be pre-produced and installed on-site during turbine erection.

Accordingly, in another aspect, the invention provides a method of reducing the RCS of a wind turbine, according to claim 4.

The panels may be attached to the mounts before the mounts are attached to the tower. Alternatively, the mounts may initially be attached to the tower, and then the panels attached to the mounts.

The panels may be of composite construction and include radar-absorbing material (RAM) within the composite structure.

Accordingly, the inventive concept encompasses a radar-absorbing panel adapted for attachment to the outer surface of a wind turbine tower, the panel having a layered structure comprising inner and outer composite layers and including radar-absorbing material in the form of a functional layer and a reflector layer in spaced-apart relation.

The inner and outer composite layers are also known as the inner and outer 'skins', and may be fabricated from at least one layer of a fibre and resin composite matrix. Suitably, these are glass-fibre reinforced composite layers, typically comprising E-glass fibres and an epoxy or polyester resin. Preferably, these layers are one millimetre thick GRE (glass-reinforced epoxy). The outer composite layer may have a gel-coated outer surface. Alternatively, the outer surface may be painted. The functional layer is preferably located inwardly of the outer composite layer, and the reflector layer is preferably located inwardly of the inner composite layer.

The panel may be of sandwich-panel construction, including a lightweight core sandwiched between the functional and reflector layers. The core may be made from open- or closed-cell structured foam or syntactic foam. Suitable foams include PET (polyethylene terephthalate) and PVC (polyvinyl chloride), but other suitable foams will be apparent to persons skilled in the art. The foam should have a strength and density appropriate for the structural requirements of the panel. Aside from foam, other suitable materials may be used, for example balsa wood.

Alternatively, the panel may be formed as a solid laminate. In such embodiments, instead of a lightweight core, the panel would include at least one intermediate fibre-reinforced composite layer between the functional layer and the reflector layer. The panel would preferably include a plurality of intermediate fibre-reinforced composite layers between the functional and reflector layers. These layers preferably comprise E-glass fibres combined with an epoxy or polyester resin.

The functional layer may be a circuit analogue (CA) layer. When radar waves are incident upon the panel, the combination of the CA layer and the reflector layer act to absorb the radar waves so that they are not reflected back to the radar source. A CA layer comprises an array of elements, such as monopoles, dipoles, loops, patches or other geometries. The elements are made from a material having controlled high frequency resistance. The element material and the geometry of the array elements are designed such that the functional layer exhibits a chosen high frequency impedance spectrum. The impedance spectrum is chosen such that the functional layer and the reflector layer form a radar absorbing circuit in the composite structure. Different impedance spectra are required for different composite structures.

In sandwich-panel embodiments, the CA layer may be provided directly on an outer surface of the foam core. Applicant's co-pending patent application PCT/GB2010/051424 describes CA circuitry provided directly onto a core material. In other examples, the CA circuit may be provided on an additional layer, for example on a layer of glass-fibre fabric as described in applicant's other co-pending PCT patent applications PCT/GB2010/050668 and PCT/GB2010/050665.

The reflector layer, also referred to as a 'ground plane', may include a layer of carbon tissue. Suitably, the reflector layer is carbon cloth of sufficient thickness to act as a reflector of radar signals at the required frequency. The reflector layer may include a frequency selective surface. The frequency selective surface may comprise a circuit analogue layer provided on a substrate. The circuit analogue layer which makes up the reflector layer will have properties that are complementary with the functional layer so that the two layers in combination operate as a radar absorbing material at the required frequencies only. Radiation at other frequencies may either be reflected or allowed to transmit through the frequency selective reflector, depending on the design.

As an alternative to a CA layer, the functional layer may be a resistive layer. In this way, the functional and reflector layers act as a Salisbury screen absorber in a conventional way. Suitable materials for forming the resistive layer include resistive materials deposited on a glass fabric or other composite-compatible layer, fabric layers containing a mixture of carbon fibres and glass fibres, or a resin layer containing an appropriate amount of resistive or conducting particulates.

The CA approach is used to make absorbers thinner, or to fit a particular material to match the frequency. Generally, the CA approach is more expensive than the resistive-layer approach. Hence, a resistive functional layer is preferable when the required absorption properties are achievable within an acceptable panel thickness. Otherwise, a CA functional layer is preferred.

It will be appreciated that the following factors affect the radar-absorption performance of the panel: the thickness and dielectric and magnetic constants of all of the materials used; the resistance of the resistive layer; and any anisotropy in the properties of these materials. With all other factors remaining the same, the separation between the functional layer and the reflector layer can be selected to obtain absorption at a desired frequency. In sandwich panels, this separation is determined largely by the thickness of the core, although the thickness of any intermediate composite layers, for example the inner composite layer, will also contribute to the separation. In solid laminates, the separation is determined by the combined thickness of the intermediate composite layers between the functional and reflector layers.

By suitably selecting the separation between the functional and reflector layers, the panel may be adapted, for example, to absorb radar frequencies of around 1.2 GHz, around 3 GHz or around 10 GHz. Table 1 below summarizes suitable thicknesses for a sandwich panel core, and for the combined thicknesses of the intermediate layers in a solid laminate, for absorbing at these frequencies in both CA and resistive embodiments.

**Table 1**

| | | 1.2 GHz | 3 GHz | 10 GHz |
|---|---|---|---|---|
| Core thickness for panels of sandwich-panel construction (in mm) | resistive functional layer (377 Ω/sq) | 57 | 20 | 4 |
| | CA functional layer | 10-57 | 5-20 | 1 -4 |
| Combined thickness of intermediate layers for solid laminate panels (in mm) | resistive functional layer (377 Ω/sq) | 30 | 11 | 3 |
| | CA functional layer | 13-30 | 5-11 | 1-3 |

The values provided in Table 1 are calculated on the basis that the inner and outer composite layers are 1 mm thick layers of GRE. The thicknesses provided for the resistive functional layer examples are the thicknesses required for a Salisbury screen absorber having a sheet resistance of 377 Ω/sq (ohms per square) to be optimised at each frequency. As mentioned above, CA functional layers are generally preferred when a thickness below that achievable with a resistive functional layer is required. Hence, the upper ranges for the CA examples in Table 1 corresponded to the lower ranges for the resistive examples at the corresponding frequencies. Panels constructed in accordance with Table 1 have a radar-absorption performance of 30 dB or more.

It will be appreciated that there may be additional material, for example further GRE layers, behind the reflector layer for environmental protection. Of course, such layers do not affect the separation between the functional and reflector layers.

As previously described, the panels may be curved to conform to the curvature of the tower. Also, as described previously, the panels may include mounting formations for engaging with the mounts described above.

Accordingly, the inventive concept includes, in combination, a radar-absorbing panel of the type described above, and a mount for attaching the panel to an outer surface of the tower. Details of a suitable mount have already been described above.

The inventive concept also includes a method of reducing the radar cross section of a wind turbine, the method comprising mounting a plurality of radar absorbent panels of the type described above to an outer surface of the tower.

### Brief description of the drawings

Figure 1 shows a wind turbine having a tower and a plurality of radar-absorbing panels mounted thereto;
Figure 1A is a schematic perspective view of a radar-absorbing panel;
Figure 2 is a schematic cross-section through a first example of a radar-absorbing panel of sandwich panel construction;
Figure 3 is a schematic cross-section through a second example of a radar-absorbing panel in the form of a solid laminate;
Figure 4 is a side view of a radar-absorbing panel mounted to the external surface of the tower by magnetic mounts; and
Figure 5 is an enlarged sectional view of part of Figure 4, additionally showing means for attaching the panel to the mounts.

### Detailed description

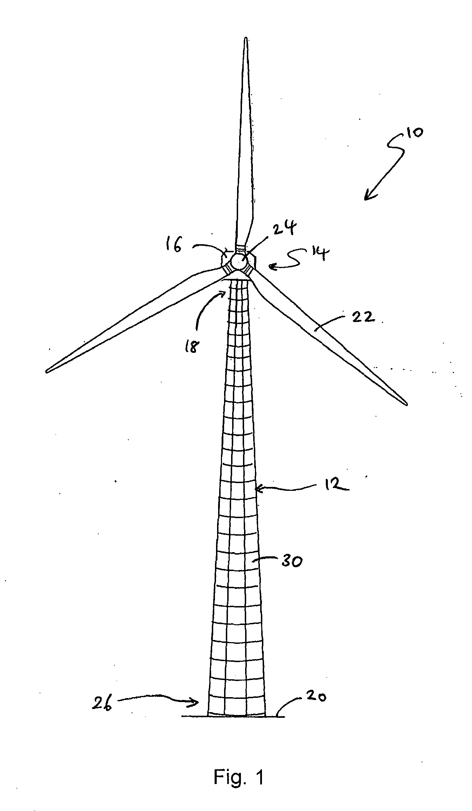

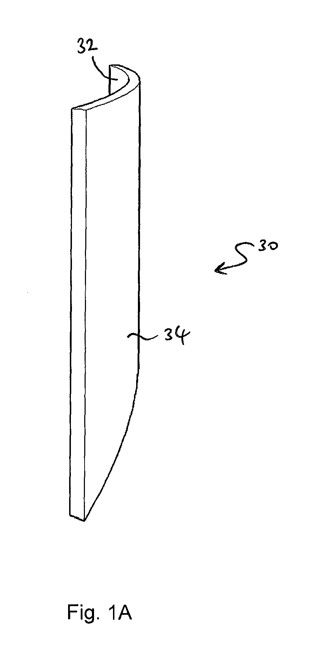

Figure 1 shows a wind turbine 10 comprising a tower 12, a rotor 14 and a nacelle 16. The nacelle 16 and rotor 14 are supported at an upper end 18 of the tower 12, typically around 100 metres above ground level 20. The nacelle houses the generator, drive train and gearbox (if present). The rotor 14 is adjacent the nacelle 16 and includes three equally-spaced rotor blades 22 that extend radially from a central rotor hub 24. The wind turbine 10 may be one of several wind turbines comprising a wind farm.

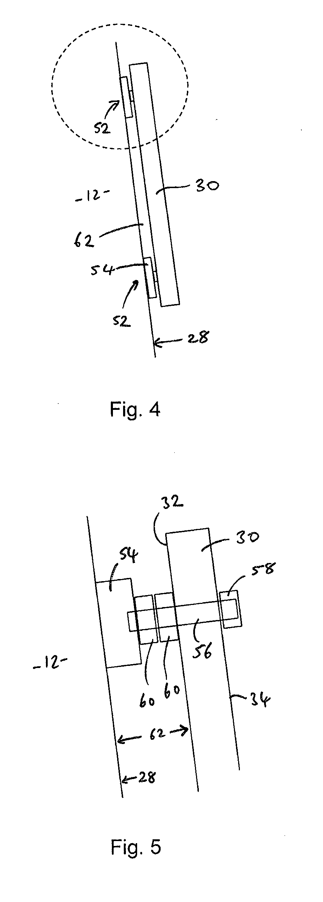

The tower 12 is constructed from several tubular sections of steel, which are bolted together to form the outer wall of the tower 12. The tower 12 has a circular cross section and tapers towards the upper end 18, such that the diameter of the base 26 of the tower 12 is larger than the diameter at the upper end 18. The outer wall is generally frustoconical, and defines a frustoconical external surface 28 (visible in Figure 4). In accordance with the invention, the external surface 28 is clad with a plurality of radar-absorbing panels 30. The cladding serves to reduce the radar cross section (RCS) of the tower 12 in order to reduce the visibility of the tower 12 to radar systems, and hence minimise the interference caused by the wind turbine 10 to radar systems in the vicinity of the wind farm.

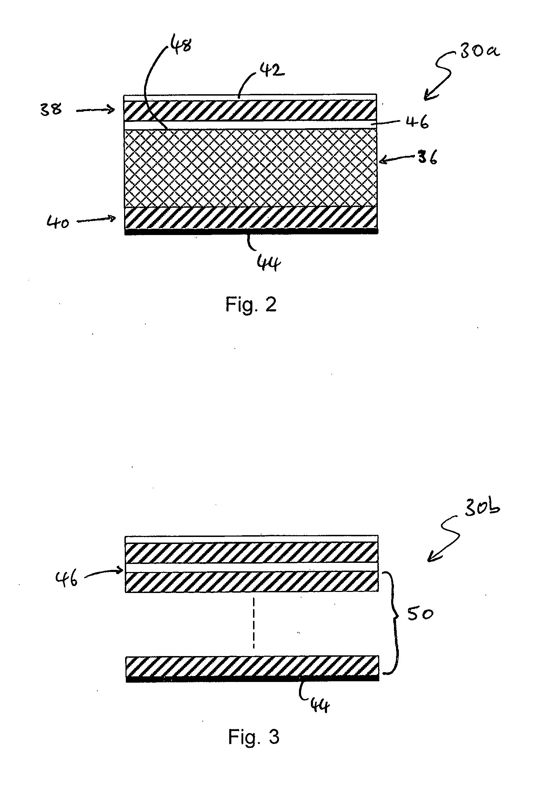

As shown schematically in Figure 1A, each panel 30 is of part-circular curvature to match the local curvature of the tower 21 at the height at which the panel 30 is fixed. The panel shown in Figure 1A has a concave inner surface 32 and a convex outer surface 34. It will be appreciated that the terms 'inner' and 'outer' are used herein to refer to the relative positions of the surfaces 32, 34 when the panel 30 is in use, i.e. when it is attached to the tower 12. Of course, the panel 30 may be in any other orientation when not attached to the tower 12, hence these terms should not be interpreted as limiting the scope of the invention. The composition of a panel 30 is described below with reference to Figures 2 and 3.

Referring to Figure 2, this shows a cross-section through a first example of a radar-absorbing panel 30a in accordance with the invention. The panel 30a is of sandwich-panel construction and comprises a lightweight core 36 sandwiched between outer and inner 1 mm thick GRE layers. In this example, the core 36 is made from open-cell PET foam. A gel coat 42 is provided on the outer composite layer 38 to increase the durability of the panel 30a.

A reflector layer 44 is provided beneath, or inwardly of the inner composite layer 40, such that the inner composite layer 40 is disposed between the reflector layer 44 and the foam core 36. In this example, the reflector layer 44 is 50 g carbon cloth (also known as 'carbon veil'), which functions as a back reflector for radar. In other examples, the reflector layer 44 could be disposed between the core 36 and the inner composite layer 40.

A functional layer 46 is provided on top of, or on an outer side of the foam core 36, such that the functional layer 46 is between the core 36 and the outer composite layer 38. In this example, the functional layer 46 is a circuit analogue (CA) layer, which comprises a circuit provided on an outer surface 48 of the foam core 36. The CA layer 46 and the carbon veil 44 together impart radar-absorbing properties to the panel 30a.

The separation between the CA layer 46 and the carbon veil 44 is a key design parameter and affects the radar absorbing properties of the panel 30a, as does the thickness and properties of the matrix material and the outer and inner composite layers 38, 40. In this example, the relative separation between the CA layer 46 and the carbon veil 44 is determined by the thickness of the core 36 and the thickness of the inner composite layer 40, which together serve to separate the CA layer 46 and the carbon veil 44 in the composite structure. In this example, the thickness of the core 36 is 10 mm, and the thickness of the inner composite layer is 1 mm, which makes the panel 30a suitable for absorbing radar frequencies of 1.2 GHz, in accordance with Table 1.

The sandwich panel 30a shown in Figure 2 will be constructed in the following manner. First, the outer composite layer 38 is laid in a mould, which is coated with a gel coat 42. Then the core 36 with the CA layer 46 already provided on its outer surface 48 is placed on the outer composite layer 38. Subsequently, the inner composite layer 40 is placed on the core 36, and the carbon veil 44 is placed on the inner composite layer 40. A bleed fabric and a vacuum bag or vacuum film are placed over the construction. The outer and inner composite layers 38, 40 are impregnated with a matrix material such as a curable epoxy resin to bind the layers together when a vacuum is applied to the structure and the structure is cured under the vacuum and applied heat. Once the curing process is complete, the resulting gel-coated composite sandwich panel 30a is released from the mould. The cured gel coat 42 provides a high quality and highly durable UV and hydrolysis-resistant coating on the external surface of the panel 30a, which may also be painted to further enhance durability and to achieve required visual properties.

Referring now to Figure 3, this shows a cross-section through a second example of a radar-absorbing panel 30b. This panel 30b is of solid laminate construction and, in contrast to the sandwich panel 30a of Figure 2, does not have a foam core. Instead, the panel 30b of Figure 3 includes one or more intermediate GRE composite layers 50 between the carbon veil reflector layer 44 and the functional layer 46. In all other respects, the panel 30b is substantially the same as the panel 30a of Figure 2, and is manufactured in a similar way to that panel.

As with the previous example, the separation between the functional layer 46 and the reflector layer 44 is a key design parameter and affects the radar absorbing properties of the panel 30b. The separation is determined by the number and thickness of the intermediate composite layers 50. In this example, the combined thickness of the intermediate composite layers is 13 mm, which makes the panel 30b suitable for absorbing radar frequencies of 1.2 GHz, in accordance with Table 1.

The technique for attaching the panels 30 to the wind turbine tower 12 is described below with reference to Figures 4 and 5.

Referring to Figures 4 and 5, the panels 30 are attached to the steel wall of the tower 12 by a plurality of magnetic mounts 52. Four mounts, two of which are visible in Figure 4, are used to attach each panel 30 to the external surface 28 of the tower 12. Each mount 52 engages with a mounting formation provided close to a respective corner of the panel 30. In this example, the mounting formations are holes in the panel 30.

Each mount 52 comprises a flat magnetic base 54 and has a threaded stud 56 that projects orthogonally from the centre of the base 54. In use, the base 54 is magnetically attached to the external surface 28 of the wind turbine tower 12, with the stud 56 projecting outwardly from the tower 12 in a direction substantially orthogonal to said surface 28.

The stud 56 is received by one of the holes in the panel 30. A nut 58 and washer (not shown) are provided on the threaded stud 56 to secure the panel 30 to the mount 52. The base 54 of the mount 52 prevents the panel 30 from touching the external surface 28 of the tower 12. In this way, a gap 62 is defined between the external surface 28 of the tower 12 and the inner surface 32 of the panel 30, or in other words, the panel 30 is spaced apart from the tower 12. This arrangement is desirable because it provides a free-draining cavity behind the panels. The cavity prevents water from becoming trapped behind the panels, which could lead to corrosion problems through the tower paint. To further reduce such problems, the edges of adjacent panels 30 are sealed using a collar (not shown) to substantially prevent wind and rain from entering the cavity.

Spacer washers 60 are provided on the stud 56, between the base 54 and the inner surface 32 of the panel 30, to distance the panel further from the external surface 28. The ability to vary the size of the gap 62 in this way allows a given panel to fit against varying curvatures, hence fewer variants of the panel are required to clad a tower.

Whilst examples of the invention have been described above, it will be appreciated that variations or modifications may be made to these examples without departing from the scope of the invention as defined in the accompanying claims. For example, in the examples described above, the reflector layer 44 is formed from carbon cloth. However, in another example, the reflector layer 44 may comprise a frequency-selective surface. The frequency-selective surface may be a circuit analogue layer deposited on a substrate. Such a substrate may be plain weave glass cloth. The frequency-selective layer that forms the reflector layer may also be provided directly on the inner surface of the foam core 36 in sandwich panel embodiments.

## Claims

1. A wind turbine (10) comprising a tower (12) and having at least one radar-absorbing panel (30) attached to an outer surface (28) of the tower by means of a mount (52) that does not penetrate the outer surface; **characterised in that** the or each panel (30) is magnetically attached to the outer surface (28); and **in that** the or each panel (30) is spaced apart from the outer surface of the tower (28) such that a gap (62) is defined between the panel and the outer surface.

2. A wind turbine (10) according to Claim 1, wherein the or each panel (30) is attached to the tower (12) by a mount (52) having a magnetic base (54) for attaching magnetically to the outer surface of the tower and an engagement portion for engaging with the panel.

3. A wind turbine (10) according to Claim 2, wherein the engagement portion engages mechanically with the panel (30).

4. A method of reducing the RCS of a wind turbine (10), the method comprising mounting a plurality of radar-absorbing panels (30) to an outer surface (28) of the wind turbine tower (12) without penetrating the outer surface, **characterised in that** the method comprises magnetically attaching the panels (30) to the outer surface (28) and the panels are spaced apart from the outer surface of the tower such that a gap (62) is defined between the panels and the outer surface.

5. The method of Claim 4, comprising, in either order, attaching a plurality of mounts (52) to the outer surface (28) and mechanically attaching the panels (30) to the mounts.

6. A wind turbine (10) according to Claim 1, wherein the or each panel (30) has a layered structure comprising inner (40) and outer (38) composite layers and including radar-absorbing material in the form of a functional layer (46) and a reflector layer (44) in spaced-apart relation.

7. A wind turbine (10) according to Claim 6, wherein the panel (30) is constructed as a solid laminate and includes at least one fibre-reinforced composite layer between the functional layer (46) and the reflector layer (44).

8. A wind turbine (10) according to Claim 6, wherein the panel (30) is of sandwich-panel construction and includes a lightweight core (36) between the functional (46) and reflector (44) layers.

9. A wind turbine (10) according to any one of Claims 6 to 8, wherein the functional layer (46) is a circuit analogue layer.

10. A wind turbine (10) according to Claim 9 when dependent upon Claim 8, wherein the circuit analogue layer is provided on a surface of the core (36).

11. A wind turbine (10) according to any of Claims 6 to 8, wherein the functional layer (46) is a resistive layer.

12. A wind turbine (10) according to any of Claims 6 to 11, wherein the reflector layer (44) includes a layer of carbon tissue.

13. A wind turbine (10) according to any of Claims 6 to 12, wherein the panel (30) is curved to conform to the curvature of the wind turbine tower (12).

## Patentansprüche

1. Windturbine (10), die einen Turm (12) umfasst und die mindestens ein radarabsorbierendes Tafelfeld (30) umfasst, das an einer äußeren Oberfläche (28) des Turms mittels einer Befestigung (52) befestigt ist, die die äußere Oberfläche nicht durchdringt; **dadurch gekennzeichnet, dass**
das Tafelfeld oder jedes Tafelfeld (30) magnetisch an der äußeren Oberfläche (28) befestigt ist; und dass das Tafelfeld oder jedes Tafelfeld (30) von der äußeren Oberfläche des Turms (28) derart beabstandet ist, dass eine Lücke (62) zwischen dem Tafelfeld und der äußeren Oberfläche definiert ist.

2. Windturbine (10) nach Anspruch 1, wobei das oder jedes Tafelfeld (30) durch eine Halterung (52) an dem Turm (12) befestigt ist, wobei die Halterung (52) eine magnetische Basis (54) zur magnetischen Befestigung an der äußeren Oberfläche des Turms und einen Eingriffsabschnitt aufweist, um das Tafelfeld in einen Eingriff zu nehmen.

3. Windturbine (10) nach Anspruch 2, wobei der Eingriffsabschnitt das Tafelfeld (30) mechanisch in Eingriff nimmt.

4. Verfahren zum Vermindern des RCS (RCS = radar cross section = Radarquerschnitt) einer Windturbine (10), wobei das Verfahren ein Befestigen mehrerer radarabsorbierender Tafelfelder (30) an einer äußeren Oberfläche (28) des Windturbinenturms (12) umfasst, ohne dass dabei die äußere Oberfläche durchdrungen wird, **dadurch gekennzeichnet, dass** das Verfahren ein magnetisches Befestigen der Tafelfelder (30) an der äußeren Oberfläche (28) umfasst, und dass die Tafelfelder von der äußeren Oberfläche des Turms derart beabstandet sind, dass eine Lücke (62) zwischen den Tafelfeldern und der äußeren Oberfläche definiert ist.

5. Verfahren nach Anspruch 4, das, ausgeführt in beliebiger Reihenfolge, ein Befestigen mehrerer Halterungen (52) an der äußeren Oberfläche (28) und ein mechanisches Befestigen der Tafelfelder (30) an den Halterungen umfasst.

6. Windturbine (10) nach Anspruch 1, wobei das oder jedes Tafelfeld (30) eine Schichtstruktur aufweist, die eine innere (40) und eine äußere (38) Verbundschicht aufweist und ein radarabsorbierendes Material in der Form einer funktionalen Schicht (46) und eine Reflektorschicht (44) in beabstandeter Beziehung enthält.

7. Windturbine (10) nach Anspruch 6, wobei das Tafelfeld (30) aus einem massiven Laminat konstruiert ist und mindestens eine faserverstärkte Verbundschicht zwischen der funktionalen Schicht (46) und der Reflektorschicht (44) enthält.

8. Windturbine (10) nach Anspruch 6, wobei das Tafelfeld (30) aus einer Schichtstruktur-Tafelfeld-Konstruktion (Sandwich-Tafelfeld) besteht und einen leichtgewichtigen Kern (36) zwischen der funktionalen Schicht (46) und der Reflektorschicht (44) enthält.

9. Windturbine (10) nach einem der Ansprüche 6 bis 8, wobei die funktionale Schicht (46) eine analoge Schaltkreisschicht ist.

10. Windturbine (10) nach Anspruch 9, wenn abhängig von Anspruch 8, wobei die analoge Schaltkreisschicht auf einer Oberfläche des Kerns (36) bereitgestellt ist.

11. Windturbine (10) nach einem der Ansprüche 6 bis 8, wobei die funktionale Schicht (46) eine Widerstandsschicht ist.

12. Windturbine (10) nach einem der Ansprüche 6 bis 11, wobei die Reflektorschicht (44) eine Schicht aus Kohlenstoffgewebe enthält.

13. Windturbine (10) nach einem der Ansprüche 6 bis 12, wobei das Tafelfeld (30) gekrümmt ist, um sich auf diese Weise der Krümmung des Windturbinenturms (12) anzupassen.

## Revendications

1. Éolienne (10) comprenant une tour (12) et ayant au moins un panneau absorbant les ondes radar (30) attaché à une surface extérieure (28) de la tour au moyen d'un support (52) qui ne pénètre pas dans la surface extérieure ; **caractérisée en ce que**
le ou chaque panneau (30) est attaché de façon magnétique à la surface extérieure (28) ; et **en ce que** le ou chaque panneau (30) est espacé de la surface extérieure de la tour (28) de sorte qu'un espacement (62) est défini entre le panneau et la surface extérieure.

2. Éolienne (10) selon la revendication 1, dans laquelle le ou chaque panneau (30) est attaché à la tour (12) par un support (52) ayant une base magnétique (54) pour attachement magnétique à la surface extérieure de la tour et une partie de mise en prise pour mettre en prise le panneau.

3. Éolienne (10) selon la revendication 2, dans laquelle la partie de mise en prise met mécaniquement en prise le panneau (30).

4. Procédé de réduction de la SER (Surface Équivalente Radar) d'une éolienne (10), le procédé comprenant le montage d'une pluralité de panneaux absorbant les ondes radar (30) sur une surface extérieure (28) de la tour d'éolienne (12) sans pénétrer dans la surface extérieure, **caractérisé en ce que** le procédé comprend l'attachement magnétique des panneaux (30) à la surface extérieure (28) et les panneaux sont espacés de la surface extérieure de la tour de sorte qu'un espacement (62) est défini entre les panneaux et la surface extérieure.

5. Procédé selon la revendication 4, comprenant, quel que soit ordre, l'attachement d'une pluralité de supports (52) à la surface extérieure (28) et l'attachement mécanique des panneaux (30) aux supports.

6. Éolienne (10) selon la revendication 1, dans laquelle le ou chaque panneau (30) a une structure feuilletée comprenant des couches composites intérieure (40) et extérieure (38) et incluant une matière absorbant les ondes radar sous la forme d'une couche fonctionnelle (46) et d'une couche formant réflecteur (44) dans une relation espacée.

7. Éolienne (10) selon la revendication 6, dans laquelle le panneau (30) est construit comme un stratifié plein et inclut au moins une couche composite renforcée de fibres entre la couche fonctionnelle (46) et la couche formant réflecteur (44).

8. Éolienne (10) selon la revendication 6, dans laquelle le panneau (30) a une structure de panneau en sandwich et inclut une âme légère (36) entre les couches fonctionnelle (46) et formant réflecteur (44).

9. Éolienne (10) selon n'importe laquelle des revendications 6 à 8, dans laquelle la couche fonctionnelle (46) est une couche analogue à un circuit.

10. Éolienne (10) selon la revendication 9 lorsque dépendante de la revendication 8, dans laquelle la couche analogue à un circuit est disposée sur une surface de l'âme (36).

11. Éolienne (10) selon n'importe laquelle des revendications 6 à 8, dans laquelle la couche fonctionnelle (46) est une couche résistive.

12. Éolienne (10) selon n'importe laquelle des revendications 6 à 11, dans laquelle la couche formant réflecteur (44) inclut une couche de carbone.

13. Éolienne (10) selon n'importe laquelle des revendications 6 à 12, dans laquelle le panneau (30) est incurvé pour se conformer à la courbure de la tour d'éolienne (12).
